# EUROPEAN PATENT APPLICATION

(11) **EP 0 952 444 A1**
(43) Date of publication of application: **27.10.1999**
(21) Application number: 98107535.1
(22) Date of filing: 24.04.1998
(51) Int. Cl.: G01N 22/04

(54) **Method and device for measuring at least one property of rocks and soils**

(71) Applicant: Eidgenössische Technische Hochschule Zürich, 8092 Zürich (CH)
(72) Inventor: Benedikt, Oswald, Dipl. El. Ing. GTN, 5620 Bremgorten (CH)
(74) Representative: Blum, Rudolf Emil Ernst

(57) **Abstract**

The device comprises a time domain reflectometry (TDR) instrument (3) generating signals that are coupled into a probe (1). The probe is a single rod surface waveguide and the signals propagate as surface waves along it. They are reflected at the end of the probe and/or by inhomogeneities of the enclosing rock or soil (2). The reflections are recorded by the TDR instrument (3) and used for generating an averaged value or spatially resolved profile of the property to be measured. The method and device are especially suited for measuring the water contents of rocks or soils. The use of a surface waveguide extends sensitivity and accuracy as compared to known solutions.

## Description

The invention relates to a method and a device for measuring at least one property of rocks and soils according to the preamble of the independent claims.

The properties that have been measured by devices and methods of this type are, for example, water content, conductivity and dielectric constant.

In particular volumetric and gravimetric water content, in the following referred to as 'water content', is an important quantity in many fields of application. In environmental and civil engineering, in agricultural applications and in environmental remediation procedures the water content is the quantity of interest which drives and affects almost all transport processes of pollutants through the vadose zone into the aquifer (water table). Techniques that can be used to measure water content *in situ* in a non destructive way are therefore of importance.

In known measurement techniques the water content is determined by the roundtrip time of a signal propagating along a transmission line placed in the soil or rock. The roundtrip time is the time required by an electrical signal to travel from the beginning of a transmission line to its end, where it is reflected, and back to the beginning. Conventionally used transmission lines are devices consisting of two or more electrical conductors capable of guiding high speed electrical signals.

The presence of water in rocks and soils can be detected by the quantitative determination of the material's dielectric properties. Since the length of the transmission line is known a *priori*, the signal propagation speed of a transmission line placed in the medium can be calculated directly from the measured roundtrip time. From the signal propagation speed the dielectric constant of the medium surrounding the transmission line can be calculated and be converted into the volumetric or gravimetric water content via calibration functions as e.g. described by K. Roth, R. Schulin, H. Fluehler and W. Attinger in *Calibration of time domain reflectometry for water content measurement using a composite dielectric approach*, Water Resources Research, Vol. 26(10), 1990. Calibration functions can be acquired in the laboratory for the different saturation situations with high accuracy.

TDR probes in use today generally consist of two or more conductors. Either these conductors are flat bands mounted on a dielectric body of cylindrical cross section and variable length, depending on the application; or they consist of two or more cylindrical rods of circular cross section with nothing in between (classical two-wire transmission line configuration), cf. G.C. Topp, J. L. Davis, and A. P. Annan, *Electromagnetic Determination of Soil Water Content using TDR: II. Evaluation of Installation and Configuration of Paralleled Transmission Lines*, Soil Science of America Journal, Vol. 46, 1982.

In either case, flat band or circular rod, the conductors are made of very good conductor materials, such as copper or brass. There are also TDR probe designs where the flat bands are wrapped in spiral form around the dielectric body.

An aim of the known devices lies in providing an accurate measurement of the desired property of the rock or soil. The accuracy of the measurement depends, however, on the range of the electric field extending from the probe. If this range is too small, sensitivity suffers.

The problem to be solved by the present invention is therefore to provide a method and device of the type mentioned initially but with higher accuracy or sensitivity. At the same time, the design of the device should remain simple.

This problem is solved by a method and device according to the independent claims. By using a single rod surface waveguide and by performing the measurement using surface waves, the electric field extends much further into the rock or soil than with conventional probes. Hence, it covers a larger volume, which increases the sensitivity of the measurement and the accuracy of the results. At the same time, the probe design becomes very simple.

For decreasing the attenuation of the guided surface wave in a lossy medium, the probe can be provided with a dielectric coating.

Preferably, the reflection signals from the surface wave are analysed in time resolved manner for generating a spatially resolved profile of the property to be measured.

The invention is especially suited for analysing the water content of rocks or soils but can also be applied to measure other properties that influence the dielectric constant, such as pollution by various substances.

Further preferred features and advantages of the invention are described in the dependent claims as well as in the now following description by reference to the figures, which show:
Fig. 1 a schematic set-up of an embodiment of the invention,
Fig. 2 an illustration of the electrical and magnetic fields of the TM mode in the probe,
Fig. 3 a sectional view of a coupling structure,
Fig. 4 a simplified flow chart illustrating a preferred method for spatially resolved analysis of the data,
Fig. 5 an experimental set-up, and
Fig. 6 the TDR trace obtained with the set-up of Fig. 5.

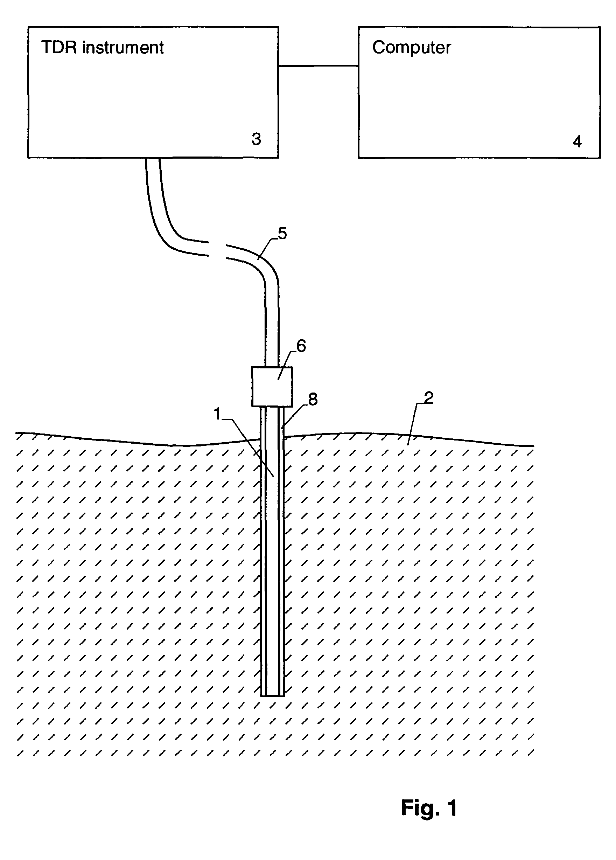

The basic set-up of a preferred system for measuring the water contents of rocks or soils is shown in Fig. 1. It consists of a probe 1 inserted into rock or soil 2, a TDR (time domain reflectometry) instrument 3 and a computer 4. TDR instrument 3 is sending signals into probe 1 and determines their reflection characteristics. For this purpose, a coaxial cable 5 and a coupling structure 6 are linking TDR instrument 3 and probe 1. Computer 4 receives the measured data from TDR instrument 3 and calculates water content values therefrom. The individual components of the system are now described in more detail.

### TDR instrument:

TDR instrument 3 generates step-signals with frequency components extending into the microwave range. It sends them into coaxial cable 5 and then determines the roundtrip time of signals through probe 1 or performs a time resolved measurement of the reflections generated by the signals. Suitable instruments of this type, such as the Tektronix 1502, have conventionally been used to detect cracks and failures in telephone subscriber lines.

### Probe:

Probe 1 is a single rod transmission line capable of guiding the microwave signals from the TDR instrument as surface waves. It consists of one single metallic rod (a good electric conductor like copper, brass, aluminium or even steel is preferred) of preferably circular cross section. This rod may or may not be contained within a cylindrical dielectric 8 depending on the medium whose water contents are to be measured. For example in soils that exhibit small ohmic and dielectric losses, a dielectric cover will not be necessary. In soils that exhibit considerable dielectric losses (loss tangent > 0.1), however, the dielectric cover is used. This is because the electromagnetic field of a surface waveguide extends far, i.e. a few wavelengths, into the space around the probe and a lossy medium introduces strong attenuation.

If probe 1 is coated with a dielectric material of thickness d and of relative dielectric permittivity εᵣ > 1, attenuation caused by the dielectric and ohmic losses of the soil or rock is decreased because part of the energy of the electromagnetic field is contained within the dielectric coating, cf. O. Goubau, *Surface Waves and their Applications to Transmission Lines*, Journal of Applied Physics, Vol. 21(11), 1950. The portion of the energy contained therein can be controlled both by the thickness t of the coating and the relative permittivity of the dielectric coating. Typical values of the thickness t are between one and a few, e.g. 10, millimeters.

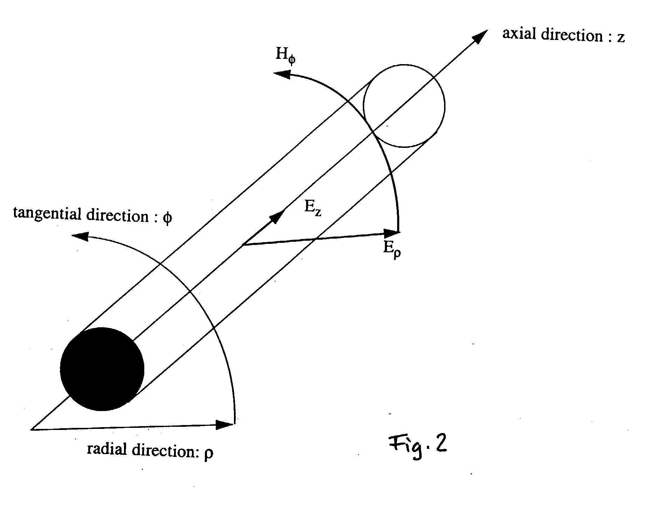

The dominant mode propagating on a single conductor surface wave guide is of the TM (transversal magnetic) type, whose electromagnetic field has the following components, see Fig. 2:
1. axial electrical component, E_{z} : comparatively small due to conductivity of the surface wave guide,
2. radial electrical component, E_{ρ} : comparatively large,
3. tangential magnetic component, H_{φ}.

The length of probe 1 can be varied to fit a specific application's needs. This means that a length from a few centimeters, for laboratory applications, to a few meters, for field applications, is possible. However, there is a trade-off between the length of the probe and the dielectric and ohmic losses experienced by the probe. The greater the losses, both ohmic and dielectric, of the medium under investigation, the shorter is the probe and vice versa, respectively.

The diameter of probe 1 is also an important parameter that can be varied between certain limits in order to change the volume covered by a measurement. The lower limit is given by both the fact that too small a diameter, below approximately 2 mm, leads to increasing attenuation. In addition to this, a too thin probe is mechanically weak and unable to penetrate hard ground. The upper limit of the diameter is given by the fact that impedance matching becomes more difficult and the fact that too large a diameter is not desired for a non-destructive measurement technique. The greater the diameter the greater the measurement volume covered by the probe will be.

A preferred diameter lies in a range between 2 mm and 30 mm.

### Coupling structure:

Coupling structure 6 of has to transform the TEM modes of coaxial cable 5 to the TM modes of probe 1.

A possible embodiment of such a coupling structure is a cone-like mode conversion tool, as it has been described by O. Goubau in *Surface Waves and their Applications to Transmission Lines*, Journal of Applied Physics, Vol. 21(11), 1950. However, there are also more sophisticated ways to convert the TEM mode into the TM mode, cf. W. J. Dewar and J. C. Beal in *Coaxial-Slot Surface Wave Launchers*, IEEE Transactions on Microwave theory and Techniques, Vol. 18(9), 1970.

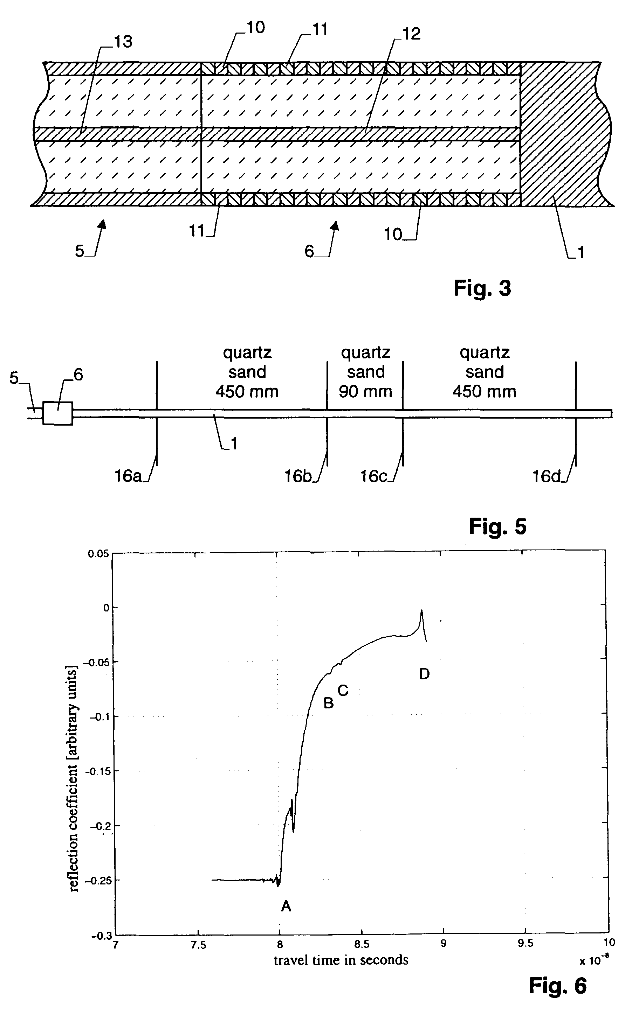

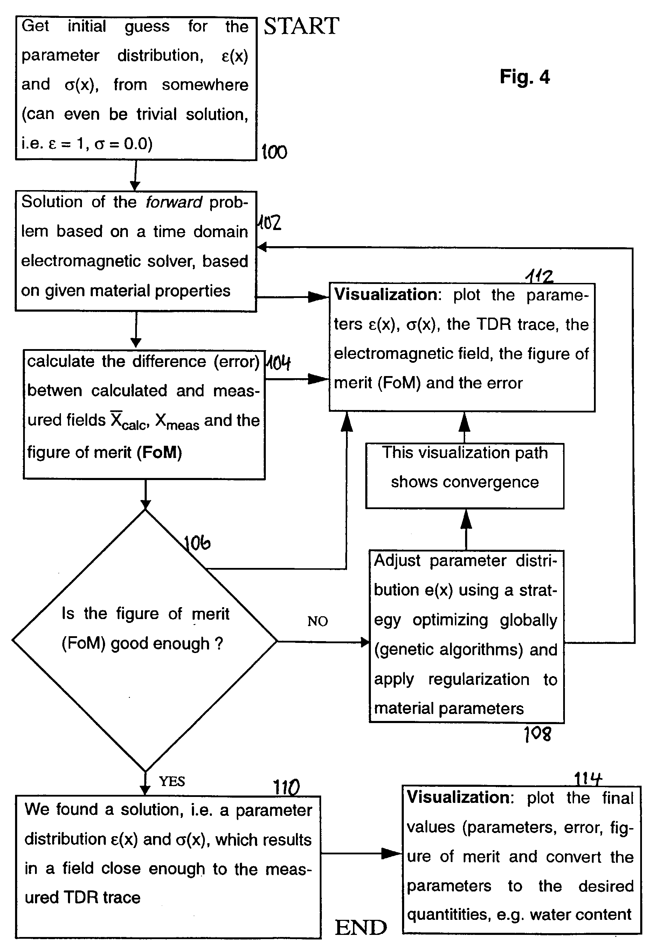

A preferred embodiment for a coupling structure 6 is shown in Fig. 3. Its basic set-up is equal to the one of coaxial cable 5, but the outer shield consists of an array of conducting and non-conducting rings 10, 11 respectively. The number N of ring pairs determines the efficiency of the elecromagnetic coupling and can vary between 1 and as many as can be tolerated with respect to the length of the coupling structure. It is important that the non-conducting rings 11 have a width smaller than approximately one-tenth of the minimum wavelength of the used pulses. The minimum wavelength is determined by the maximum frequency component in the excitation signal. E.g. if a TDR instrument has significant portions of the spectrum up to 20 GHz, then the minimum wavelength is 15 mm, corresponding to a maximum slot width of 1.5 mm. This way the conversion of the TEM mode of the coaxial cable into the TM mode of the SWG can be accomplished, with a trade-off between bandwidth and coupling efficiency.

As can be seen from Fig. 3, coupling structure 6 is arranged coaxially between coaxial cable 5 and probe 1. The central conducting core 12 of coupling structure 6 is electrically connected to both, the central cable 13 of coaxial cable 5 and the axis of probe 1. The rings 10, 11 of coupling structure 5 have the same diameter as the shield of coaxial cable 5.

In the embodiment shown here, all rings 10, 11 have the same width. It is possible, however, to vary the width of the rings along the coupling structure.

In Fig. 3 it has been assumed that the outer diameters of coaxial cable 5 and probe 3 are substantially equal. If they differ strongly, rings 10, 11 of increasing or decreasing radius can be used for providing a conical transition between the two parts.

### Sensitivity, noise:

The sensitivity and representative volume, somewhat related quantities, of the SWG TDR probe mainly depend on the characteristic radius r₀ of the probe, which is the primary quantity of interest. The characteristic radius or grenzradius is the radius of a cylinder within which 90% of the energy of the electromagnetic field, guided by the SWG probe, is contained. Objects causing dielectric contrast outside the grenzradius do not contribute to the form of the TDR trace.

The sensitivity of a TDR probe is defined as the minimum change in the dielectric properties of the medium surrounding the probe that is necessary to change the form of the TDR signal (TDR traces). Of course, this change must result in changes of the TDR signal above the (electronic) noise level and the resolution of the TDR instrument.

The noise level is given by the signal-to-noise ratio, SNR, which depends also on the TDR instrument's electronics. SNR can be increased by acquiring a large number of TDR signals and calculating an average TDR trace (averaging).

The sensitivity of the SWG TDR probe is improved considerably due to the extended field distribution of the electromagnetic surface waves and is much better than for conventional TDR probes having two or more conductors with whatsoever geometry. Referring to the aforementioned optional coating of the SWG probe, the coating's thickness t is another parameter that can be varied as a trade-off between sensitivity and reduction of attenuation by ohmic and dielectric losses of the soil or rock medium.

The representative volume of the probe is defined as the volume which contributes to the TDR signal recorded by the TDR instrument. Due to the fact that the radius of the cylinder of influence *around* the probe is considerably larger than the one of comparable two- or more conductor TDR probes, the representative volume of an SWG TDR probe is significantly larger. At the same time, the contact problem, i.e. the error caused by non-perfect contact between probe and medium under investigation, is considerably reduced by the single conductor surface wave guide type probe.

### Method of operation based on roundtrip time:

The set-up according to the present invention can be operated using conventional travel time measurement methods analogous to TDR probes having two- or more conductors. The travel time of the TDR signal on the probe is used to calculate the relative dielectric permittivity of the medium, which is then related to water contents via calibration functions. The velocity of the TM mode is related to the dielectric properties of the medium surrounding the probe in a way that is typical for the TM mode's propagation characteristics (see e.g. A. Sommerfeld, *Vorlesungen über Theoretische Physik: Elektrodynamik*, Vol. 3, pp. 164, Verlag Harri Deutsch, Thun + Frankfurt/M, 4th edition, 1988 and O. Goubau, *Surface Waves and their Applications to Transmission Lines*, Journal of Applied Physics, Vol. 21(11), 1950). Therefore the dielectric properties of the medium ε_{medium} can be calculated from the travel time tₜᵣₐᵥₑₗ of the signal and e.g. be converted into water content via calibration functions. Existing calibration functions can be used (see e.g. G.C. Topp, J.L. Davis and A.P. Annan, *Electromagnetic Determination of Soil Water Content: Measurement in Coaxial Cables*, Water Resources Research, Vol. 16(3), 1980 and K. Roth, R. Schulin, H. Fluehler and W. Attinger, *Calibration of time domain reflectometry for water content measurement using a composite dielectric approach*, Water Resources Research, Vol. 26(10), 1990). It may be pointed out here that by using appropriate calibration functions, not only water content may be measured but, by analysing the dielectric behaviour of the medium, other quantities can be detected, such as pollution by various substances. This also applies to the spatially resolved measurements described in the next section.

By measuring the travel time of a pulse on probe 1, an averaged dielectric constant of the medium can be determined. This yields accurate results if the dielectric constant or water content of the medium is constant along the probe. However, the present system can also acquire spatially resolved data for a non-homogeneous medium as will be explained in the next section.

### Spatially resolved measurements:

The application of the surface wave guide TDR probe as a spatially resolving technique allows to extract profiles of dielectric properties or water content from one single TDR trace. If the water content is not uniform along probe 1, the dielectric properties will vary accordingly, which leads to corresponding changes in the TDR trace recorded by the TDR instrument. The dielectric profile and the water content profile can be extracted from this trace using numerical inversion schemes based on parameter optimisation. However, this requires the use of more sophisticated signal processing techniques, i.e. the solution of a so called *ill-posed inverse problem*.

In a preferred embodiment, the profiles of the dielectric and conductivity properties along probe 1 are calculated with an iterative method as shown Fig 4. If a quantitative reconstruction of the dielectric and conductivity properties is desired, a so-called *non-linear ill-posed inverse problem* results because the number of parameters to be reconstructed normally exceeds the number of measured data points. Furthermore the global optimum and not some local minimum or maximum is the desired solution. Finding the global optimum of this non-linear problem represents the major challenge of the spatially resolved measurements, which consequently requires appropriate optimisation methods. The preferred approach consists of an iterative scheme based on the repeated solution of the forward problem using varied input parameters. The forward problem is defined as the calculation of the TDR traces based on a *known* parameter distribution, i.e. based on a *known* spatial distribution, along probe 1, of the complex valued relative dielectric permittivity and electric conductivity ε. The input to the forward problem solver is modified during the iterations in a way such that the difference between the TDR traces that has been obtained through measurements and the one obtained by numerical simulation, i.e. by using the forward solver, reaches its minimum.

The algorithm in Fig. 4 starts from an initial assumption for the distribution of ε (step 100), which can be set to unity for the relative dielectric and magnetic properties and zero for the conductivity. From this, the corresponding TDR trace X_{calc} is calculated (step 102) and compared to the measured TDR trace Xₘₑₐₛ (step 104). This comparison yields a figure of merit FoM, e.g. derived from a sum of squared deviations between X_{calc} and X_{meas.} FoM is compared to a threshold value (step 106). If FoM is below the threshold value, the distribution of ε is varied for increasing FoM (step 108) and the forward problem is solved again. If FoM has reached the threshold value, calculation stops (step 110) and the results are displayed (step 114). The results of steps 102 and 108 are continuously plotted for user feedback (step 112).

Preferred methods for varying the parameters in step 108 are genetic algorithms (GA) and simulated annealing because they are potentially capable of finding the global optimum even in the presence of several non-global optima (see e.g. V. Nissen, *Einführung in evolutionäre Algorithmen*, Vieweg, 1997 or T. Baeck, *Evolutionary Algorithms*, Oxford University Press, 1996). Additionally, the input parameters to the forward solver, i.e. the dielectric and conductivity distribution along probe 1, must be restricted so as not to exceed certain limits based on physical reasoning. This operation is called *regularisation*. No linearisation is applied to the equations that compose the *inverse* problem.

A method for spatially resolved analysis of TDR traces has been described by M. Yanuka, G. C. Topp, S. Zegelin and W. D. Zebchuk in *Multiple Reflection and Attenuation of Time Domain Reflectometry Pulses: Theoretical Considerations for Applications to Soil and Water*, Water Resources Research, Vol. 24(7), 1988.

### Example:

Figure 5 shows an example of an experimental set-up with a non-coated probe 1 extending through three layers of quartz sand separated by PVC walls 16 - 16d of a thickness of 10 mm. The probe had no dielectric coating, was made of brass, had a length of 800 mm and a diameter of 15 mm.

The corresponding TDR trace is shown in Fig. 6. The traces were recorded using a Tektronix 11801 digital sampling oscilloscope in its TDR mode of operation. The positions of the walls are marked by clear spikes A, B, C and D in the trace.

## Claims

1. A device for measuring at least one property, in particular the water content, of rocks and soils comprising a probe (1) to be embedded into the rock or soil, characterized in that said probe is a single rod surface waveguide and that said device comprises means (3 - 6) for generating an electromagnetic surface wave in said probe and for analysing at least one reflection signal generated by said surface wave.

2. The device of claim 1 wherein said probe is a bare metal rod.

3. The device of claim 1 wherein said probe comprises a metal rod laterally covered by a dielectric coating (8).

4. The device of claim 3 wherein said coating has a thickness between 1 and 10 mm.

5. The device of one of the preceding claims, comprising a coupling structure (6) for coupling said surface wave into said probe (1), said coupling structure comprising a central conducting core (12) and a plurality of axially separated conducting rings (10) extending at a distance around said core (12).

6. The device of claim 5 wherein an axial distance between two of said rings does not exceed one tenth of a smallest wavelength of said surface wave.

7. The device of one of the preceding claims, further comprising a recording means (3) for time resolved measurement of reflections generated by said surface wave and an analyzing means (4) for determining a spatially resolved profile of said at least one property from said time resolved measurement of reflections.

8. The device of one of the preceding claims, wherein said single rod surface waveguide is substantially cylindrical and has a diameter between 2 and 30 mm.

9. A method for measuring at least one property, in particular the water content, of soils or rocks, wherein a probe (1) is placed into said soil or rock, characterized in that said probe (1) is a single rod surface waveguide and that said method comprises the steps of
generating an electromagnetic surface wave in said probe and
analysing at least one reflection signal generated by said surface wave.

10. The method of claim 9 further comprising the steps of
preforming a time resolved measurement of reflections generated by said surface wave and
determining a spatially resolved profile of said at least one property from said time resolved measurement of reflection.

11. Use of the device and method of one of the preceding claims for determining the water content of soil or rock.
